# EUROPEAN PATENT SPECIFICATION

(11) **EP 4 284 186 B1**
(45) Date of publication and mention of the grant of the patent: **30.10.2024**
(21) Application number: 22701065.9
(22) Date of filing: 24.01.2022
(51) Int. Cl.: A23G 9/06, A23G 9/08, A23G 9/12, A23G 9/20, A23G 9/22, A23G 9/26, A23L 3/375, A47J 43/04, A47J 43/12

(54) **A MACHINE FOR DISPENSING AND MIXING A LIQUID FOOD PRODUCT WITH LIQUID NITROGEN**
MASCHINE ZUM AUSGEBEN UND MISCHEN EINES FLÜSSIGEN LEBENSMITTELS MIT FLÜSSIGEM STICKSTOFF
MACHINE POUR DISTRIBUER ET MÉLANGER UN PRODUIT ALIMENTAIRE LIQUIDE AVEC DE L'AZOTE LIQUIDE

(30) Priority: 29.01.2021 IT 202100001850
(43) Date of publication of application: 06.12.2023
(73) Proprietor: Bitjam S.r.l. Startup Cost. AI Sensi Dell'art. 4, Comma Convertito Con Legge N. 33/2015, 00195 Rome (IT)
(72) Inventor: SABATINI, Daniele, 01028 Orte (VT) (IT); LUDOVICI, Christian, 00144 Rome (IT); CESPITES, Giulio, 00199 Rome (IT); SABATINI, Stefano, 01028 Orte (VT) (IT)
(74) Representative: Bellomia, Paolo
(86) International application number: PCT/IB2022/050585
(87) International publication number: WO 2022/162516

(56) References cited:
- PL-B1- 235 536
- US-A1- 2006 110 515
- US-A1- 2009 053 375
- US-A1- 2017 360 059
- US-A1- 2019 075 814

## Description

This invention relates to a machine for dispensing and mixing a liquid food product with liquid nitrogen according to present claim 1, which machine can be widely applied in kitchens in such a way as to obtain products of the ice cream, pastry and similar sectors (by way of a nonlimiting example: ice cream, soft ice cream, granitas, sorbets, shakes, frozen desserts, ice lollies, cold custards).

It is known that, in the kitchens of restaurants, liquid nitrogen is normally used for rapidly cooling food, highlighting the aromas.

In this situation, the liquid nitrogen is contained inside so-called Dewar containers and is drawn as necessary for cooling the dish using spoons or receptacles.

However, handling the liquid nitrogen in the above-mentioned way has drawbacks linked mainly to the health of the cook and the exact use of the nitrogen which is not correctly dosed. Document PL235536B B1 discloses a device for the production of ice-cooled liquid i.e. ice-cream, in a disposable plastic container.

It is also known that large industrial machines are usually used to obtain products of the ice cream and pastry sectors and the like which require relatively long processing times to obtain the finished food product.

Moreover, at the end of the processing operations performed by the above-mentioned machines, the food product must be transported and stored whilst maintaining the so-called "cold chain". During these operations, there is the risk of the product being affected in terms of flavour and/or consistency (for example, numerous ice crystals may be created inside the package).

The technical purpose of the invention is therefore to provide a machine for dispensing and mixing a liquid food product with liquid nitrogen which is able to overcome the drawbacks of the prior art.

The aim of the invention is therefore to provide a machine for dispensing and mixing a liquid food product with liquid nitrogen which allows safe use of the liquid nitrogen.

A further aim of the invention is to provide a machine for dispensing and mixing a liquid food product with liquid nitrogen which is versatile and easy to use.

A further aim of the invention is to provide a machine for dispensing and mixing a liquid food product with liquid nitrogen which has small dimensions and which is therefore suitable for household use.

A further aim of the invention is to provide a machine for dispensing and mixing a liquid food product with liquid nitrogen which maximises the flavour and the properties of the liquid food product.

The technical purpose indicated and the aims specified are substantially achieved by a machine for dispensing and mixing a liquid food product with liquid nitrogen comprising the technical features according to appended claim 1

The dependent claims correspond to preferred embodiments of the invention.

The technical purpose indicated and the aims specified are achieved by a machine for dispensing and mixing a liquid food product with liquid nitrogen comprising a first containment chamber configured to contain a predetermined quantity of liquid nitrogen and a second containment chamber configured to contain a predetermined quantity of liquid food product. The machine also comprises a movement cylinder connected to the first and second containment chambers and extending along a vertical processing axis and a dispensing device movable in a slidable fashion inside the movement cylinder between a dispensing position and a rest position. In the dispensing position, the dispensing device is at least partly extracted from the movement cylinder for releasing the liquid nitrogen together with the liquid food product in a container. In the rest position, the dispensing device is withdrawn into the movement cylinder. The machine according to the invention also comprises a mixing spiral extending outside the movement cylinder. The mixing spiral is movable by rotation about the processing axis and is also movable by translation between the dispensing position and the rest position.

Advantageously, the machine makes the use of liquid nitrogen safe and versatile even in a domestic kitchen.

Advantageously, the machine is able to render at various stages of cooling (cold, granita, *cremolato,* ice cream) any liquid food product such as, for example, juice, extract, centrifuged drinks, fruit or vegetable smoothies, wine and alcoholic drinks.

Advantageously, the machine is able to generate, as required at the time, ice creams, *cremolato* and the like of any flavour with personalised ingredients.

Advantageously, the machine allows a large saving of energy and water because there is no need to control the cold chain or to use a chiller cabinet, a mixer and/or a pasteuriser since the product is created as required at the time by mixing the liquid food product with the liquid nitrogen.

Further features and advantages of the invention are more apparent in the nonlimiting description which follows of an embodiment of a machine for the production and dispensing of liquid or semi-liquid food products.

The description is set out below with reference to the accompanying drawings which are provided solely for purposes of illustration without restricting the scope of the invention and in which:
- Figures 1A and 1B show, respectively, an exploded view and a front view of components of the machine according to the invention;
- Figure 2A shows a perspective view of a component of the machine;
- Figures 2B and 2C show a cross-section of the component of Figure 2A in two configurations;
- Figure 2D shows an enlarged view of a detail of Figure 2B;
- Figures 3A and 3B show perspective views of two embodiments of the component of Figure 2A;
- Figures 4A-4C show an operating sequence of the machine according to the invention;
- Figure 5 shows a perspective view of the machine according to the invention;
- Figures 6A and 6B show, respectively, an exploded and a perspective view of a container for the machine.

With reference to the accompanying drawings, the reference label "M" denotes a machine for dispensing and mixing a liquid food product with liquid nitrogen. The term "liquid food product" includes juice, extract, centrifuged drinks, fruit or vegetable smoothies, wine, alcoholic drinks and the like.

The machine "M", according to the invention is configured to release liquid nitrogen together with a liquid food product in such a way as to obtain a food product at various cooling stages such as, for example, ice lollies, granitas, *cremolato,* cold custards, ice creams and cold juices.

In other words, depending on the quantity of liquid nitrogen which is released and mixed with the liquid food product, it is possible to obtain different cooled products.

With reference to the accompanying drawings, the machine "M" comprises a first containment chamber 1a configured to contain a predetermined quantity of liquid nitrogen and a second containment chamber 1b configured to contain a predetermined quantity of liquid food product.

According to the embodiment illustrated in the accompanying drawings, the second containment chamber 1b is inserted in the first containment chamber 1a.

According to a further possible embodiment, not illustrated, the first and second containment chambers 1a, 1b are made starting from a same container divided in such a way as to create two compartments and thus define the respective mixing chambers 1a, 1b.

According to the preferred embodiment, the first and second mixing chambers 1a, 1b are made in the form of cups.

Advantageously, this shape facilitates the dispensing of the liquid food product and the liquid nitrogen towards the outside of the chambers 1a, 1b, as described in detail below.

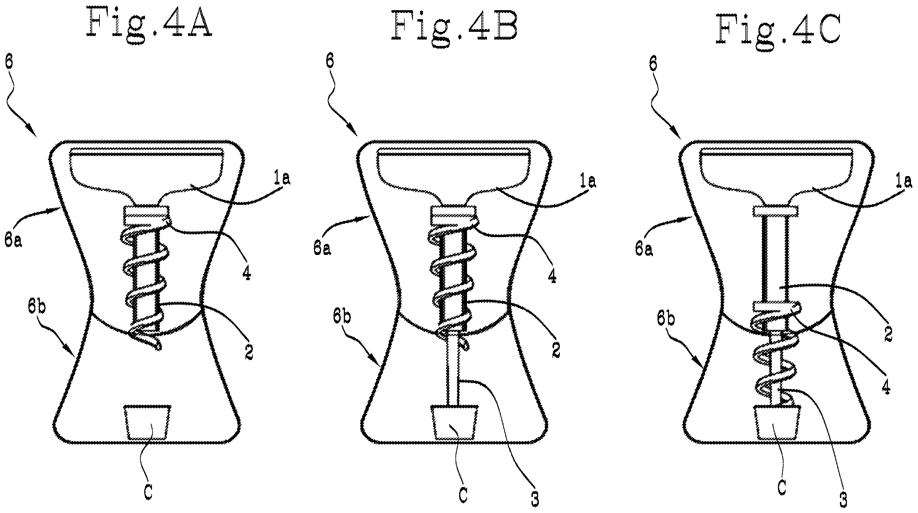

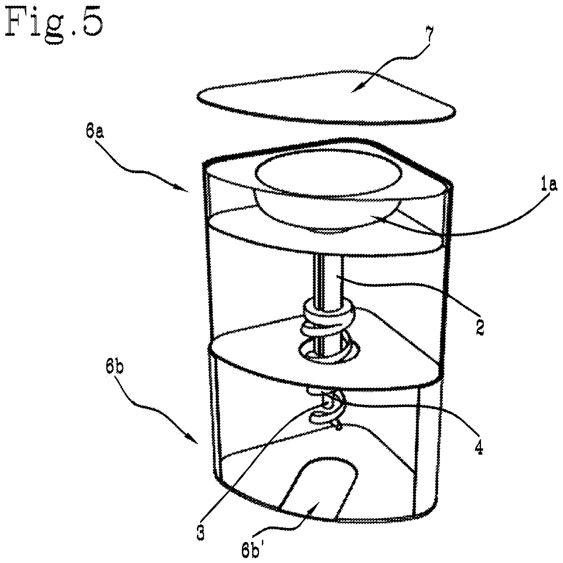

As shown in Figures 4A-4C and 5, the machine "M" also comprises a main body 6 having a loading portion 6a defining a housing space for the first and second containment chambers 1a, 1b. The loading portion 6a is open at the top to allow a filling of the first and second containment chambers 1a, 1b.

Preferably, the loading portion 6a is made of metallic material or plastic material. The main body 6 also has a closing element 7 which can be removably engaged with the loading portion 6a to close the housing space.

In this situation, once the first and second containment chambers 1a, 1b have been filled, the closing element 7 is applied in such a way that no extraneous body can enter the containment chambers 1a, 1b and/or that part of the liquid food product or of the liquid nitrogen can escape from the machine "M" during its operation. The main body 6 also comprises a dispensing portion 6b positioned below the loading portion 6a and configured for receiving a container "C" in which the liquid nitrogen and the liquid food product are dispensed to form the desired cooled product.

Preferably, the dispensing portion 6b is made of transparent material such as, for example, plastic or glass.

Preferably, the dispensing portion 6b has at least one opening for inserting or removing the container "C".

Even more preferably, the dispensing portion 6b has a bottom wall having a guide 6b' for the container "C" in such a way that, during a dispensing of the liquid food product and the liquid nitrogen, the container "C" is correctly positioned and there is no risk that part of the products is dispensed outside the container "C" with consequent waste of the products.

According to the preferred embodiment shown in Figures 4A-4C, the main body 6 has, at the front, a substantially hourglass shape which is harmonious and visually pleasing.

According to the embodiment shown in Figure 5, on the other hand, the main body 6 has, in cross section, a shape substantially representing a quarter of a circle.

Advantageously, this shape allows the machine "M" to be also positioned in corners of the kitchen in such a way as not to occupy an excessive space inside the kitchen.

Advantageously, this shape also allows a plurality of machines "M" to be positioned close to each other along a circumference. This aspect is particularly advantageous if the machines "M" are positioned in a bar or in public premises since it allows different food products to be dispensed simultaneously whilst maintaining a good aesthetic and visual effect.

The machine "M" also comprises a movement cylinder 2 connected to the first and second containment chambers 1a, 1b and extending along a vertical processing axis X.

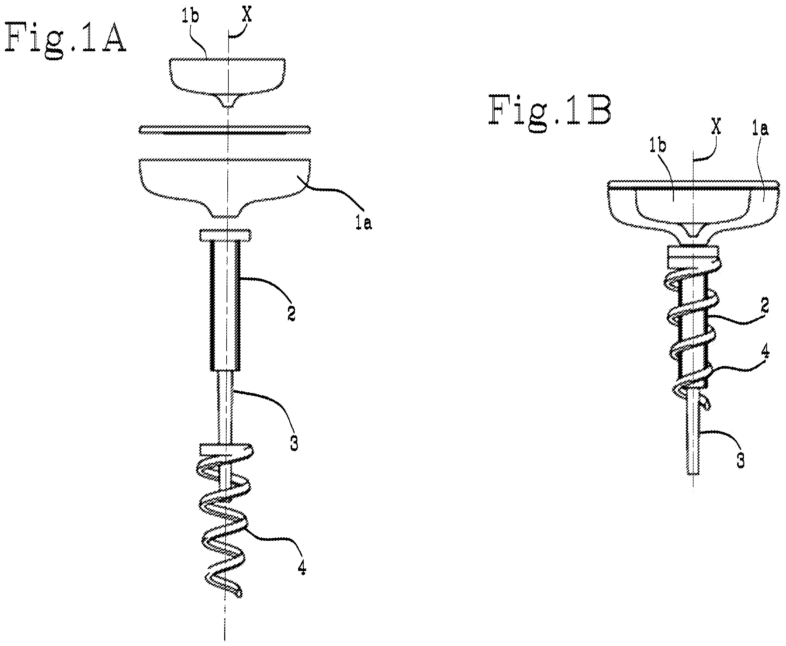

According to the preferred embodiment, the movement cylinder 2 is applied below the first and second containment chambers 1a, 1b (Figure 1B) and is hollow inside.

The machine "M" also comprises a dispensing device 3 configured for dispensing the liquid food product and the liquid nitrogen contained in the respective containment chambers 1a, 1b.

Preferably, the dispensing device 3 is made in the form of a straw and is slidably inserted in the movement cylinder 2.

The dispensing device 3 is movable in a sliding fashion in the movement cylinder 2 between a dispensing position (Figures 4B and 4C) and a rest position (Figure 4A).

In particular, in the dispensing position, the dispensing device 3 is at least partly extracted from the movement cylinder 2 for releasing the liquid nitrogen together with the liquid food product in a container "C".

In the rest position, the dispensing device 3 is withdrawn into the movement cylinder 2. In this position, the container "C" may be extracted for picking up the cooled product obtained at the end of dispensing or it may be inserted in the machine "M" for filling with the above-mentioned cooled product. Advantageously, the presence of the dispensing device 3 prevents contact between an operator (for example a cook) and the nitrogen. Once the liquid nitrogen has been inserted in the first containment chamber 1a, the dispensing device 3 dispenses the correct quantity of liquid nitrogen for the cooled product to be obtained without the need for an operator to pick it up using ladles or the like from the containers of the Dewar type.

The machine "M" also comprises a mixing spiral 4 extending outside the movement cylinder 2. The mixing spiral 4 is configured to be inserted in the container "C" and to mix the liquid nitrogen with the liquid food product until obtaining the desired cooled product.

Preferably, the mixing spiral 4 has a substantially drip-shaped extension section. This shape is advantageous since it prevents a large quantity of cooled product (in particular ice cream) from sticking to the mixing spiral 4 whilst the mixing spiral 4 is extracted from the container "C" with consequent reduced waste of cooled product.

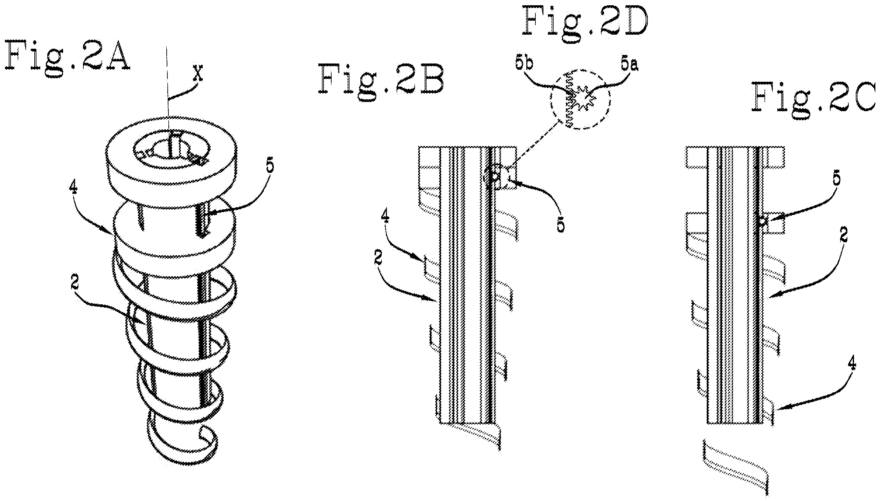

Even more preferably, the mixing spiral 4 extends about the processing axis "X" with a tapered trend (Figure 2A). According to the embodiment illustrated in the accompanying drawings, the mixing spiral 4 is of the conical type. Advantageously, this aspect makes the mixing spiral 4 easy to insert inside the container "C" since it follows the shape tapered towards the bottom of the container "C".

Preferably, the mixing spiral 4 comprises at least one portion 4a made of an elastic material, such as, for example, silicone.

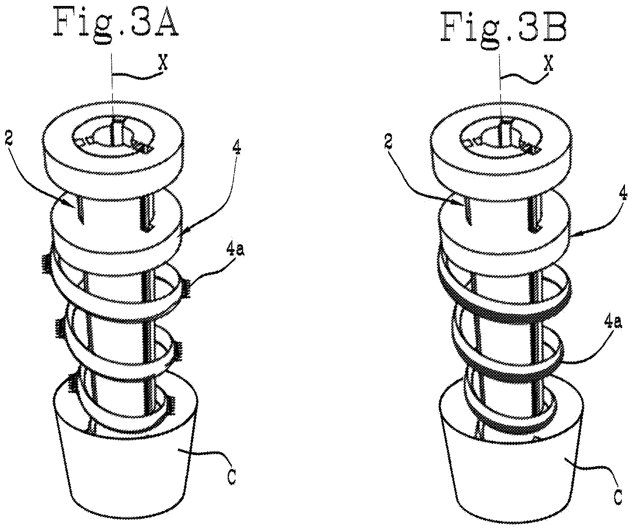

More in detail, according to the embodiment of Figure 3A, the mixing spiral 4 comprises a plurality of fins positioned at the points of maximum curvature of the mixing spiral 4. The fins are able to bend according to the size of the container "C" in which the mixing spiral 4 must be inserted and are also able to slide along the side wall of the container "C" in such a way as to perform a better mixing of the liquid nitrogen with the liquid food product.

According to the embodiment of Figure 3B, on the other hand, the mixing spiral 4 comprises a strip made of elastic material which follows the profile of extension of the mixing spiral 4.

The mixing spiral 4 is movable by rotation about the processing axis "X" and is also movable by translation between the dispensing position and the rest position. According to a possible embodiment, the mixing spiral 4 is movable from the rest position (Figure 4B) to the dispensing position (Figure 4C) after the dispensing device 3.

In other words, in this situation, the dispensing device 3 passes from the rest position to the dispensing position, releases the liquid food product and the liquid nitrogen and, subsequently, the mixing spiral 4 passes from the rest position to the dispensing position for mixing together the liquid nitrogen and the liquid food product.

Alternatively, the mixing spiral 4 passes from the rest position to the dispensing position and vice versa together with the dispensing device 3.

According to the preferred embodiment shown in Figures 2A-2D, the machine "M" also comprises sliding means 5 interposed between the mixing spiral 4 and the movement cylinder 2. The sliding means 5 are configured to allow the translational motion of the mixing spiral 4 along an outer side surface of the movement cylinder 2.

Preferably, the sliding means 5 comprise gear wheels 5a made on the mixing spiral 4 and a plurality of guides 5b angularly distributed at least on an outer surface of the movement cylinder 2 and configured to engage with a respective gear wheel 5a (Figure 2D).

In use, a machine "M", as described above, is set up, the first and second mixing chambers 1a, 1b are filled respectively with liquid nitrogen and with the desired liquid food product (for example a syrup) and a container "C" is inserted in the dispensing portion 6b (Figure 4A).

Depending on how much the first and second containment chambers 1a, 1b are filled a different cooled product is obtained. In particular, the greater the quantity of nitrogen dispensed, the more the cooled products such as granitas and ice lollies will be obtained. On the other hand, the smaller the quantity of nitrogen dispensed, the more the products such as cold fruit juices and *cremolata* will be obtained.

The machine "M" is then operated and the dispensing device 3 is made to slide in the movement cylinder 2 from the rest position to the dispensing position. In this position, the dispensing device 3 dispenses the liquid nitrogen and the liquid food product into the container "C" (Figure 4B).

Subsequently, the mixing spiral 4 is moved in a translational fashion from the rest position to the dispensing position (Figure 4C). In the dispensing position, the mixing spiral 4 performs a rotary motion in such a way as to perform the actual mixing. At the end of this operation, the dispensing device 3 and the mixing spiral 4 are returned to the rest position and the container "C" is extracted from the machine "M".

Advantageously, the machine "M" makes it possible to quickly and easily produce cooled products of any consistency (granitas, ice creams, etc.) and flavour. Advantageously, the machine "M" allows a dosing of the liquid nitrogen which is precise and weighted depending on the cooled product to be obtained. Advantageously, the machine "M" reduces the energy resources used for transporting and storing cooled products since there is no need to use mixing machines, pasteurizers and the like.

According to another aspect of the invention, the machine "M" also comprises a container 8 for making ice lollies "G". The container 8 comprises a container 8a configured to receive at least partly the dispensing element 3 and the mixing spiral 4 in the dispensing position.

Preferably, the container 8a is made of transparent material such as, for example, plastic suitable for contact with food.

Even more preferably, the container 8a has a substantially triangular shape in cross section.

Alternatively, the container 8a may be made of any material suitable for contact with the food products and may have a plan cross-section of any shape.

The container 8 also comprises a first and a second containing elements 8b, 8c which can be coupled to define a recess 9 for inserting the container 8a. The insertion recess 9 is shaped to match the container 8a.

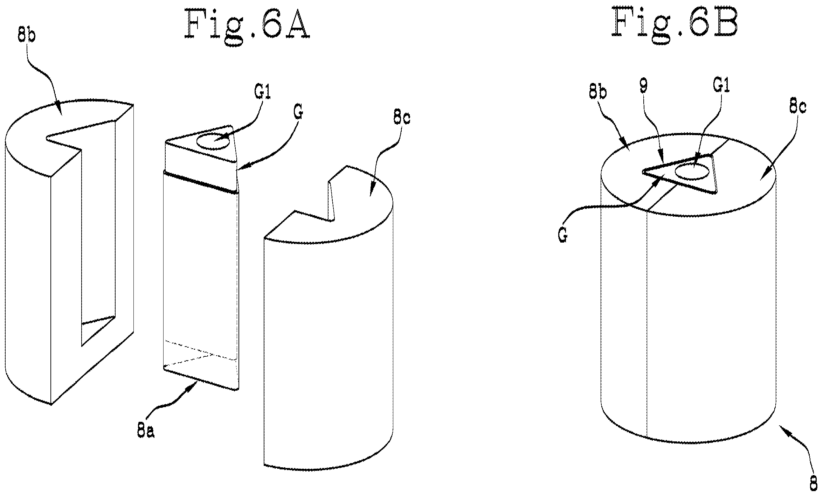

In this situation, as required at the time of creating the ice lolly "G", the first and second containing elements 8b, 8c are coupled to each other in such a way that the container 8a is positioned inside the insertion recess 9 (Figure 6B).

Subsequently, the container 8 is inserted in the dispensing portion 6b of the machine "M". In this situation, the dispensing device 3 passes from the rest position to the dispensing position in such a way as to be at least partly inserted in the container 8a.

Subsequently, the dispensing device 3 dispenses a predetermined quantity of liquid nitrogen, contained in the first containment chamber 1a, and a predetermined quantity of liquid food product, contained in the second containment chamber 1b. In this situation, the mixing spiral 4 also passes from the rest position to the dispensing position for mixing the liquid nitrogen with the liquid food product until obtaining micro-crystals of ice forming the ice lolly "G". At the end of this operation, the dispensing device 3 and the mixing spiral 4 are returned to the rest position and the first and second containment elements 8b, 8c are uncoupled for freeing the container 8a (Figure 6A).

In this situation, the ice lolly "G" is inserted in the container 8a and has a hole "G1" at the centre in which the dispensing element 3 and the mixing spiral 4 have operated to make the ice lolly "G".

A juice or, in general, a liquid to be drunk, can be inserted into the hole "G1" in the ice lolly "G".

Advantageously, the use of the liquid nitrogen allows the flavour and organoleptic properties of the liquid food product not to be affected, giving the final cooled product a higher quality.

The invention achieves the preset aims eliminating the drawbacks of the prior art. In particular, the machine "M" is compact and easy to use as well as having an attractive design.

The machine "M" makes it possible to avoid a contact between a user and the liquid nitrogen, also guaranteeing an accurate metering of the latter.

The machine "M" allows different cooled products to be created as required at the time without there being waste of any food product.

The machine "M" has a minimum energy and water consumption.

The machine "M" allows the production of cooled products which must not undergo the cold chain and which therefore maintain unchanged the consistency, flavour and food properties.

## Claims

1. A machine (M) for dispensing and mixing a liquid food product with liquid nitrogen, comprising:
- a first containment chamber (1a) designed to contain a predetermined quantity of liquid nitrogen;
- a second containment chamber (1b) designed to contain a predetermined quantity of liquid food product;
- a movement cylinder (2) connected to said first and second containment chambers (1a, 1b) and extending along a vertical processing axis (X);
- a dispensing device (3) movable in sliding fashion in said movement cylinder (2) between a dispensing position, wherein it is at least partly extracted from said movement cylinder (2) for releasing the liquid nitrogen together with the liquid food product in a container (C), and a rest position, wherein said dispensing device (3) is retracted into said movement cylinder (2);
- a mixing spiral (4) extending outside said movement cylinder (2), said mixing spiral (4) being movable in rotation about said processing axis (X) and also being movable in translation between the dispensing position and the rest position.

2. The machine (M) according to claim 1, also comprising sliding means (5) interposed between said mixing spiral (4) and said movement cylinder (2) and configured to allow the translational motion of the mixing spiral (4) along an outer side surface of said movement cylinder (2).

3. The machine (M) according to claim 2, wherein said sliding means (5) comprise gear wheels (5a) made on said mixing spiral (4) and a plurality of guides (5b) angularly distributed at least on an outer surface of the movement cylinder (2) and configured to engage with a respective gear wheel (5a).

4. The machine (M) according to any one of the preceding claims, wherein said mixing spiral (4) has a substantially drip-shaped extension section.

5. The machine (M) according to any one of the preceding claims, wherein said mixing spiral (4) extends about said processing axis (X) with a tapered trend, preferably said mixing spiral (4) being of the conical type.

6. The machine (M) according to any one of the preceding claims, wherein at least one portion (4a) of said mixing spiral (4) is made from an elastic material, said elastic material preferably being silicone.

7. The machine (M) according to any one of the preceding claims, comprising a main body (6) having:
- a loading portion (6a) defining a housing space for said first and second containment chambers (1a, 1b), the loading portion (6a) being open at the top to allow a filling of said first and second containment chambers (1a, 1b);
- a closing element (7) which can be removably engaged with said loading portion (6a) to close said housing space;
- a dispensing portion (6b) positioned below said loading portion (6a) and configured for receiving a container (C) in which the liquid nitrogen and the liquid food product are dispensed, said dispensing portion (6b) having at least one opening for inserting or removing said container (C).

8. The machine (M) according to any one of the preceding claims, comprising a container (8) for making ice lollies (G) comprising:
- a container (8a) configured to receive at least partly said dispensing element (3) and said mixing spiral (4) in the dispensing position;
- a first and a second containing element (8b, 8c) which can be coupled to each other to define a recess (9) for insertion of said container (8a), said insertion recess (9) being shaped to match the container (8a).

9. The machine (M) according to any one of the preceding claims, wherein said second containment chamber (1b) is inserted in said first containment chamber (1a).

10. The machine (M) according to any one of the preceding claims, wherein the mixing spiral (4) is movable from the rest position to the mixing position after said dispensing element (3).

## Patentansprüche

1. Maschine (M) zum Ausgeben und Mischen eines flüssigen Lebensmittels mit flüssigem Stickstoff, umfassend:
- eine erste Enthaltekammer (1a), die ausgestaltet ist, um eine vorbestimmte Menge von flüssigem Stickstoff zu enthalten;
- eine zweite Enthaltekammer (1b), die ausgestaltet ist, um eine vorbestimmte Menge von flüssigem Lebensmittel zu enthalten;
- einen Bewegungszylinder (2), der mit der ersten und der zweiten Enthaltekammer (1a, 1b) verbunden ist und sich entlang einer vertikalen Bearbeitungsachse (X) erstreckt;
- eine Ausgabevorrichtung (3), die verschiebend im Bewegungszylinder (2) zwischen einer Ausgabeposition, in der sie mindestens teilweise aus dem Bewegungszylinder (2) ausgefahren ist, um den flüssigen Stickstoff zusammen mit dem flüssigen Lebensmittel in einen Behälter (C) auszugeben, und einer Ruheposition, in der die Ausgabevorrichtung (3) in den Bewegungszylinder (2) eingefahren ist, bewegbar ist;
- eine Mischspirale (4), die sich außerhalb des Bewegungszylinders (2) erstreckt, wobei die Mischspirale (4) in Rotation um die Bearbeitungsachse (X) bewegbar und auch in Translation zwischen der Ausgabeposition und der Ruheposition bewegbar ist.

2. Maschine (M) nach Anspruch 1, zudem umfassend Verschiebemittel (5), die zwischen der Mischspirale (4) und dem Bewegungszylinder (2) eingesetzt und ausgelegt sind, um die translatorische Bewegung der Mischspirale (4) entlang einer äußeren Seitenoberfläche des Bewegungszylinders (2) zu erlauben.

3. Maschine (M) nach Anspruch 2, wobei die Verschiebemittel (5) Zahnräder (5a) umfassen, die auf der Mischspirale (4) ausgebildet sind, und eine Vielzahl von Führungen (5b), die winkelig mindestens auf einer äußeren Oberfläche des Bewegungszylinders (2) verteilt und ausgelegt sind, um mit einem jeweiligen Zahnrad (5a) in Eingriff zu gelangen.

4. Maschine (M) nach einem der vorhergehenden Ansprüche, wobei die Mischspirale (4) eine im Wesentlichen tropfenförmige Ausdehnungssektion aufweist.

5. Maschine (M) nach einem der vorhergehenden Ansprüche, wobei sich die Mischspirale (4) um die Bearbeitungsachse (X) mit einem sich verjüngenden Verlauf erstreckt, wobei die Mischspirale (4) vorzugsweise vom konischen Typ ist.

6. Maschine (M) nach einem der vorhergehenden Ansprüche, wobei mindestens ein Abschnitt (4a) der Mischspirale (4) aus einem elastischen Material ausgebildet ist, wobei das elastische Material vorzugsweise Silikon ist.

7. Maschine (M) nach einem der vorhergehenden Ansprüche, umfassend einen Hauptkörper (6), aufweisend:
- einen Ladeabschnitt (6a), definierend einen Gehäuseraum für die erste und die zweite Enthaltekammer (1a, 1b), wobei der Ladeabschnitt (6a) an der Oberseite offen ist, um ein Füllen der ersten und zweiten Enthaltekammer (1a, 1b) zu erlauben;
- ein Verschlusselement (7), das entfernbar mit dem Ladeabschnitt (6a) in Eingriff gebracht werden kann, um den Gehäuseraum zu verschließen;
- einen Ausgabeabschnitt (6b), der unter dem Ladeabschnitt (6a) positioniert und ausgelegt ist, um einen Behälter (C) aufzunehmen, in den der flüssige Stickstoff und das flüssige Lebensmittel ausgegeben werden, wobei der Ausgabeabschnitt (6b) mindestens eine Öffnung aufweist, um den Behälter (C) einzufügen oder zu entfernen.

8. Maschine (M) nach einem der vorhergehenden Ansprüche, umfassend einen Behälter (8), um Eis am Stiel (G) herzustellen, umfassend:
- einen Behälter (8a), der ausgelegt ist, um das Ausgabeelement (3) und die Mischspirale (4) in der Ausgabeposition mindestens teilweise aufzunehmen;
- ein erstes und ein zweites Enthalteelement (8b, 8c), die miteinander gekuppelt werden können, um eine Ausnehmung (9) zum Einfügen des Behälters (8a) zu definieren, wobei die Einfügeausnehmung (9) passend zum Behälter (8a) ausgeformt ist.

9. Maschine (M) nach einem der vorhergehenden Ansprüche, wobei die zweite Enthaltekammer (1b) in die erste Enthaltekammer (1a) eingefügt ist.

10. Maschine (M) nach einem der vorhergehenden Ansprüche, wobei die Mischspirale (4) aus der Ruheposition in die Mischposition nach dem Mischelement (3) bewegbar ist.

## Revendications

1. Machine (M) pour distribuer et mélanger un produit alimentaire liquide avec de l'azote liquide, comprenant :
- une première chambre de contenance (1a) conçue pour contenir une quantité prédéterminée d'azote liquide;
- une seconde chambre de contenance (1b) conçue pour contenir une quantité prédéterminée de produit alimentaire liquide ;
- un cylindre de mouvement (2) relié auxdites première et seconde chambres de contenance (1a, 1b) et s'étendant le long d'un axe de traitement vertical (X) ;
- un dispositif de distribution (3) mobile de manière coulissante dans ledit cylindre de mouvement (2) entre une position de distribution, dans laquelle il est au moins partiellement extrait dudit cylindre de mouvement (2) pour libérer l'azote liquide avec le produit alimentaire liquide dans un récipient (C), et une position de repos, dans laquelle ledit dispositif de distribution (3) est rétracté dans ledit cylindre de mouvement (2) ;
- une spirale de mélange (4) s'étendant à l'extérieur dudit cylindre de mouvement (2), ladite spirale de mélange (4) étant mobile en rotation autour dudit axe de traitement (X) et étant également mobile en translation entre la position de distribution et la position de repos.

2. Machine (M) selon la revendication 1, comprenant également des moyens de coulissement (5) interposés entre ladite spirale de mélange (4) et ledit cylindre de mouvement (2) et configurés pour permettre le mouvement de translation de la spirale de mélange (4) le long d'une surface latérale extérieure dudit cylindre de mouvement (2) .

3. Machine (M) selon la revendication 2, dans laquelle lesdits moyens coulissants (5) comprennent des roues dentées (5a) réalisées sur ladite spirale de mélange (4) et une pluralité de guides (5b) répartis angulairement au moins sur une surface extérieure du cylindre de mouvement (2) et configurés pour s'engrener avec une roue dentée respective (5a).

4. Machine (M) selon l'une quelconque des revendications précédentes, dans laquelle ladite spirale de mélange (4) a une section d'extension substantiellement en forme de goutte.

5. Machine (M) selon l'une quelconque des revendications précédentes, dans laquelle ladite spirale de mélange (4) s'étend autour dudit axe de traitement (X) avec une tendance effilée, de préférence ladite spirale de mélange (4) étant de type conique.

6. Machine (M) selon l'une quelconque des revendications précédentes, dans laquelle au moins une portion (4a) de ladite spirale de mélange (4) est fabriquée à partir d'un matériau élastique, ledit matériau élastique étant de préférence du silicone.

7. Machine (M) selon l'une quelconque des revendications précédentes, comprenant un corps principal (6) ayant :
- une portion de chargement (6a) définissant un espace de logement pour lesdites première et seconde chambres de contenance (1a, 1b), la portion de chargement (6a) étant ouverte au sommet pour permettre un remplissage desdites première et seconde chambres de contenance (1a, 1b) ;
- un élément de fermeture (7) qui peut être engagé de manière amovible avec ladite portion de chargement (6a) pour fermer ledit espace de logement ;
- une portion de distribution (6b) positionnée en dessous de ladite portion de chargement (6a) et configurée pour recevoir un récipient (C) dans lequel l'azote liquide et le produit alimentaire liquide sont distribués, ladite portion de distribution (6b) ayant au moins une ouverture pour insérer ou retirer ledit récipient (C).

8. Machine (M) selon l'une quelconque des revendications précédentes, comprenant un récipient (8) pour fabriquer des sucettes de glace (G), comprenant :
- un récipient (8a) configuré pour recevoir au moins partiellement ledit élément de distribution (3) et ladite spirale de mélange (4) dans la position de distribution ;
- un premier et un second élément de contenance (8b, 8c) qui peuvent être couplés l'un à l'autre pour définir un évidement (9) pour l'insertion dudit récipient (8a), ledit évidement d'insertion (9) étant formé pour correspondre au récipient (8a).

9. Machine (M) selon l'une quelconque des revendications précédentes, dans laquelle ladite seconde chambre de contenance (1b) est insérée dans ladite première chambre de contenance (1a).

10. Machine (M) selon l'une quelconque des revendications précédentes, dans laquelle la spirale de mélange (4) est mobile de la position de repos à la position de mélange après ledit élément de distribution (3) .
